# EUROPEAN PATENT APPLICATION

(11) **EP 4 610 055 A1**
(43) Date of publication of application: **03.09.2025**
(21) Application number: 24756809.0
(22) Date of filing: 09.02.2024
(51) Int. Cl.: B41M 1/30, B05D 7/24, B32B 9/00, B32B 15/08, C09D 11/02, C09D 11/101, C09D 201/00

(54) **METHOD FOR PRODUCING PRINTED MATERIAL**

(30) Priority: 16.02.2023 JP 2023022395; 13.07.2023 JP 2023114889
(71) Applicant: Toray Industries, Inc., Tokyo 103-8666 (JP)
(72) Inventor: TSUJI, Yuichi, Otsu-shi, Shiga 520-8558 (JP); YAMAMOTO, Chihiro, Otsu-shi, Shiga 520-8558 (JP); KAI, Michiko, Otsu-shi, Shiga 520-8558 (JP); YAMADA, Emi, Otsu-shi, Shiga 520-8558 (JP)
(74) Representative: Kador & Partner Part mbB
(86) International application number: PCT/JP2024/004508
(87) International publication number: WO 2024/171964

(57) **Abstract**

The present invention provides a method for producing a printed material that has excellent adhesion between an ink and a multilayer film regardless of the kind of the ink even if the multilayer film has excellent gas barrier properties. The present invention specifically provides a method for producing a printed material, the method comprising: a step in which an ink is transferred to a coating layer of a multilayer film that has, on at least one surface of a base material film, a metal layer and/or an inorganic compound layer, and the coating layer in this order; and a step in which the transferred ink is dried and/or cured. With respect to this method for producing a printed material, the ratio X/Y of the emission peak intensity X of the multilayer film as measured from the coating layer side to the emission intensity Y of a reference peak is 5 to 300.

## Description

### TECHNICAL FIELD

The present invention relates to a process for producing printed matter.

### BACKGROUND ART

With the increase in the global population, demand for flexible packaging used for packaging of food products and daily necessities is expected to continue to grow in the future. In regard to flexible packaging, from the perspective of imparting properties such as protection of contents, improved impact resistance, and heat sealability, it is common to laminate films with other plastic films, metal foils, heat-melt films (sealants) that serve to impart required characteristics for their particularly purposes.

In particular, packaging materials for foods and pharmaceuticals require oxygen barrier properties and water vapor barrier properties to prevent deterioration of the contents and, where necessary, to allow them to undergo heat sterilization. To this end, aluminum foil with good gas barrier properties and gas barrier films coated with aluminum, aluminum oxide, etc. have been in wide use. Furthermore, with the aim of suppressing degradation in gas barrier properties, protective layers are sometimes formed on top of gas barrier layers.

In recent years, for flexible packaging printing, active energy ray-curable lithographic printing, which cures ink by irradiation with active energy rays such as ultraviolet light and electron beams (EB), is being investigated. For example, a method for producing printed matter having a step of transferring an active energy ray-curable lithographic printing ink containing a resin (a) that has a hydrophilic group, a multifunctional (meth)acrylate (b) that has a hydrophilic group, and a difunctional (meth)acrylate (c) that has a linear aliphatic skeleton containing 8 to 18 carbon atoms onto plastic films has been proposed (see, for example, Patent document 1). The printing of flexible packaging material is generally performed by using a roll-to-roll printing machine and accordingly requires a quick drying type ink as an important item. Printing processes that use active energy ray-curable inks can ensure high productivity. In particular, if electron beam irradiation is adopted for curing, it eliminates the necessity of a photopolymerization initiator to be present in the ink, thereby reducing odors of the printed matter and the risk of migration of initiator decomposition products into the contents to ensure advantages in terms of safety realized by content protection.

However, when used to print on a gas barrier film containing a gas barrier layer as described above coated with a protection layer, such active energy ray-curable inks have the drawback that they cannot develop strong adhesion to the protection layer. To solve this problem, a technique to improve adhesion between the protective layer and the adjacent printed layer has been disclosed which adopts a multilayer body that includes a base film having at least one surface coated with an inorganic layer and a protection layer disposed thereon in this order from the base film. And the multilayer body is disclosed that the protection layer contains a functional group reactive to active energy ray irradiation and/or a cured material contains a water-soluble resin (see, for example, Patent document 2).

### PRIOR ART DOCUMENTS

### PATENT DOCUMENTS

Patent document 1: Japanese Unexamined Patent Publication (Kokai) No. 2021-98773
Patent document 2: Japanese Unexamined Patent Publication (Kokai) No. 2022-20129

### SUMMARY OF INVENTION

### PROBLEMS TO BE SOLVED BY THE INVENTION

However, if printing on the protective layer of the multilayer body disclosed in Patent document 2 is performed using a generally known active energy ray-curable ink, adhesion is actually improved, but sufficient gas barrier properties cannot be realized because of the presence of the functional group introduced into the protective layer to react upon irradiation with an active energy ray. Furthermore, if printing on the protective layer of the multilayer body disclosed in Patent document 2 is performed using a drying type ink that requires thermal drying to remove the solvent or water that is used as the medium, there occurs the problem of insufficient adhesion.

Therefore, an object of the present invention is to provide a method for producing printed matter wherein excellent adhesion between the ink and the multilayer film is achieved regardless of the type of ink used, even when the multilayer film has excellent gas barrier properties.

### MEANS OF SOLVING THE PROBLEMS

Specifically, the present invention provides a method for producing printed matter, including a step of transferring ink onto a coating layer of a multilayer film that has a metal layer and/or an inorganic compound layer and a coating layer disposed in this order on at least one surface of a base film, and a step of drying and/or curing the transferred ink, wherein the ratio X/Y is 5 or more and 300 or less, where X is an emission peak intensity measured from the coating layer side of the multilayer film under the measuring conditions described below, and Y is the emission intensity of a reference peak.

<Measuring Conditions> The surface of the coating layer of the multilayer film is brought into contact with a tetrahydrofuran (THF) solution of 4-nitro-7-piperazino-2,1,3-benzoxadiazole with a concentration of 1 × 10⁻⁴ mol/L at 60°C for 30 minutes; a piece of 15 mm × 15 mm is cut out; and an emission spectrum is measured at an excitation wavelength of 470 nm to determine the maximum value observed in the wavelength range of 520 to 550 nm to represent the emission peak intensity X.

### <Reference peak>

the emission peak intensity in the range of 520 to 550 nm measured from the THF solution of 4-nitro-7-piperazino-2,1,3-benzoxadiazole with a concentration of 1 × 10⁻⁵ mol/L is adopted as reference emission peak intensity Y.

### ADVANTAGEOUS EFFECTS OF THE INVENTION

By performing the method for producing printed matter according to the present invention, it is possible to provide printed matter in which good adhesion is achieved between the ink and the multilayer film regardless of the type of ink used even when the multilayer body has good gas barrier properties.

### DESCRIPTION OF PREFERRED EMBODIMENTS

The invention is described more specifically below. For the present invention, the term "or more" means that the relevant quantity is equal to or greater than the stated value. Similarly, the term "or less" means that the relevant quantity is equal to or smaller than the stated value. Furthermore, the term "(meth)acryloyl group" refers collectively to both acryloyl groups and methacryloyl groups, and the term "(meth)acrylate" refers collectively to both acrylates and methacrylates.

The method for producing printed matter according to the present invention includes a step for transferring ink onto a coating layer of a multilayer film that has a metal layer and/or an inorganic compound layer along with the coating layer disposed in this order on at least one surface of a base film (hereinafter occasionally referred to as the "transfer step") and a step for drying and/or curing the transferred ink (hereinafter occasionally referred to as the "drying step" and the "curing step", respectively).

First, the transfer step is described below.

### (Ink)

Examples of ink to use for the present invention include drying type inks that contain volatile components such as solvents and water and solidify as a result of removal of the volatile components through thermal drying and active energy ray-curable inks that cure as a result of crosslinking achieved through radical polymerization initiated by irradiation with an active energy ray. Of these, an appropriate one having a suitable viscosity to suit the printing method used in the transfer step may be adopted.

It is preferable that the drying type ink to use contain a pigment, a binder resin, and a solvent and/or water as the volatile component. In addition, it may further contain other additives such as, for example, wax, pigment dispersants, defoaming agents, and leveling agents, as required. In particular, in the case of performing surface printing, the inclusion of wax is preferable from the perspective of forming an ink coat having improved abrasion resistance. A drying type ink forms a solidified ink coat as the volatile component are removed by thermal drying. For the present invention, an ink containing a solvent as the main volatile component is referred to as a solvent ink while a solvent containing water as the main volatile component is referred to as a water-based ink. Here, the term "main component" refers to the component having the largest content by mass.

The aforementioned pigments include, for example, color pigments such as phthalocyanine based pigments, soluble azo based pigments, insoluble azo based pigments, lake pigments, quinacridone based pigments, isoindoline based pigments, indanthrene based pigments, metal complex based pigments, titanium oxide, zinc oxide, alumina white, calcium carbonate, barium sulfate, colcothar, cadmium red, chrome yellow, zinc yellow, Prussian blue, ultramarine blue, oxide coated glass powder, oxide coated mica, oxide coated metal particles, aluminum powder, gold powder, silver powder, copper powder, zinc powder, stainless steel powder, nickel powder, organic bentonite, iron oxide, carbon black, and graphite, and colorless extender pigments such as mica (hydrated potassium aluminum silicate) and talc (magnesium silicate). Two or more of these may be contained in combination. For the present invention, useful inks also include anchor inks that do not contain color pigments, as well as overprint varnishes.

The content of such pigments is preferably 5 mass% or more and more preferably 10 mass% or more from the perspective of ensuring a higher print density. On the other hand, from the perspective of realizing a higher ink fluidity, the pigment content in a drying type ink to use is preferably 50 mass% or less and more preferably 40 mass% or less.

Examples of the binder resin include polyurethane resins, polyamide resins, nitrocellulose, rosin-modified resins, and acrylic resins. Two or more of these may be contained in combination. The binder resin may be included in a dissolved state in a solvent or in a dispersed or emulsified state in an aqueous solvent such as alcohol or glycol, or in water. Among these, the use of a polyurethane resin is preferable from the perspective of ensuring better adhesion to the multilayer film that will be described later. It is preferable that the polyurethane resin be devoid of a (meth)acryloyl group. The weight average molecular weight of the polyurethane resin is preferably 5,000 or more and more preferably 8,000 or more from the perspective of ensuring further increased adhesion to the multilayer film that will be described later. On the other hand, the weight average molecular weight of the polyurethane resin is preferably 60,000 or less and more preferably 50,000 or less from the perspective of preventing an increase in viscosity of the drying type ink.

It is preferable that the polyurethane resin have a primary amino group and/or a secondary amino group because they can work to further increase the adhesion to the multilayer film that will be described later.

The polyurethane resin can be produced by, for example, addition polymerization of a polyol compound and a polyisocyanate compound. Here, the polyol compound refers to a compound that has two or more hydroxyl groups, and the polyisocyanate compound refers to a compound that has two or more isocyanate groups. Good methods for introducing a primary amino group or a secondary amino group into the polyurethane resin includes, for example, performing addition polymerization involving a polyol compound and a polyisocyanate compound, followed by adding a polyamine compound having a primary amino group or a secondary amino group as terminal group.

Examples of the polyol compound include polyether polyol compounds, polyester polyol compounds, and polycarbonate polyol compounds. Examples of the polyether polyol compounds include neopentyl glycol, 1,3-butanediol, 1,4-butanediol, tripropylene glycol, tetramethylene glycol, glycerin, trimethylol propane, pentaerythritol, ditrimethylol propane, diglycerin, and dipentaerythritol, as well as ethylene oxide adducts, propylene oxide adducts, tetraethylene oxide adducts, and lactone adducts thereof. Examples of the polyester polyol compounds include those compounds having polyester structures with terminal hydroxyl groups that are formed by reacting diols with dicarboxylic acids such as phthalic acid, isophthalic acid, terephthalic acid, adipic acid, oxalic acid, maleic acid, fumaric acid, or sebacic acid. Examples of the polycarbonate polyol compounds include pentamethylene carbonate diols, hexamethylene carbonate diols, hexane carbonate diols, and decane carbonate diols. Two or more of these may be used in combination. Among these, the use of a polyester polyol compound is preferable from the perspective of forming an ink coat having higher heat resistance and enhanced resistance to boiling and retort processing. It is also preferable to adopt a polyether polyol compound along with a polyester polyol compound.

Examples of the polyisocyanate compound include toluene diisocyanate, diphenylmethane diisocyanate, xylylene diisocyanate, naphthalene diisocyanate, cyclohexane diisocyanate, isophorone diisocyanate, 4,4'-methylenebiscyclohexyl isocyanate, hydrogenated xylylene diisocyanate, hexamethylene diisocyanate, lysine diisocyanate, trimethylhexamethylene diisocyanate, and modified products thereof such as isocyanurate-modified, adduct-modified, biuret-modified, and allophanate-modified compounds. Two or more of these may be used in combination.

In regard to the polyamine compound, examples of the primary amine include aliphatic diamines such as ethylenediamine, propylenediamine, tetramethylenediamine, and hexamethylenediamine; alicyclic diamines such as isophoronediamine and 4,4'-dicyclohexylmethanediamine; aromatic diamines such as toluylenediamine; arylaliphatic diamines such as xylenediamine; and polyamines such as diethylenetriamine and triethylenetetratriamine. Examples of the secondary amine include N-alkyl derivatives of primary amines as listed above. Two or more of these may be used in combination.

The content of the binder resin is preferably 5 mass% or more and more preferably 10 mass% or more from the perspective of ensuring further enhanced drying property and adhesion to the multilayer film. On the other hand, from the perspective of preventing an increase in viscosity, the content of the binder resin in a drying type ink is preferably 40 mass% or less and more preferably 30 mass% or less.

The boiling point of the solvent at 1 atmosphere is preferably 150°C or less and more preferably 120°C or less in order to impart moderately quick drying property.

In regard to the solvent, examples thereof having a boiling point of 150°C or less at 1 atmosphere include alcohols such as ethanol, 1-propanol, 2-propanol, 1-butanol, and 2-butanol; esters such as ethyl acetate, propyl acetate, butyl acetate, amyl acetate, propyl propionate, and butyl propionate; glycols such as ethylene glycol, ethylene glycol monomethyl ether, ethylene glycol dimethyl ether, ethylene glycol monomethyl ether acetate, propylene glycol monomethyl ether, propylene glycol dimethyl ether, and propylene glycol monomethyl ether acetate; and ketones such as acetone and methyl ethyl ketone. Two or more of these may be used in combination or these solvents may be combined with water.

The total content of water and the solvent in a drying type ink is preferably 10 mass% or more and 90 mass% or less.

It is preferable that the active energy ray-curable ink contain a pigment, binder resin, and (meth)acrylate, and may also include a photopolymerization initiator depending on the active energy ray source in use. In addition, it may further contain other additives such as wax, pigment dispersants, defoaming agents, and leveling agents, as required. The inclusion of a (meth)acrylate allows the ink to cure upon irradiation with an active energy ray to form an ink coat. Among others, the use of an EB-curable ink, which can be cured by electron beam irradiation, is preferable. In the case of using a UV-curable ink, which can be cured by ultraviolet light irradiation, the curing step that will be described later should include diffusion of radical species to cause a reaction between the radical species formed in the ink and the (meth)acryloyl group present in the coating layer. In contrast, in the case of using an EB-curable ink, the (meth)acryloyl group introduced in small amounts in the coating layer present in the multilayer film that will be described later is excited directly by the electron beam and crosslinked with the EB-curable ink, thereby working to realize good adhesion. Therefore, the use of an EB-curable ink serves to further improve the adhesion to the multilayer film.

Good examples of the pigment include those listed previously for drying type inks. The content of the pigment in an active energy ray-curable ink is preferably 5 mass% or more and more preferably 10 mass% or more from the perspective of achieving a higher print density. On the other hand, from the perspective of realizing a higher ink fluidity, the content of the pigment in an active energy ray-curable ink is preferably 50 mass% or less and more preferably 40 mass% or less.

Examples of the binder resin include acrylic resins, polyurethane resins, polyester resins, and phthalate resins. It is preferable that the binder resin have a weight average molecular weight of 5,000 or more from the perspective of ensuring a high printability. It is preferable to use a photosensitive resin as the binder resin because its crosslinking with the (meth)acrylate component serves to enhance curability, thereby ensuring better adhesion to the multilayer film. Here, a photosensitive resin refers to a resin having ethylenically unsaturated groups in its side chains. Examples of the ethylenically unsaturated groups include the vinyl group and (meth)acryloyl groups.

The content of the binder resin is preferably 5 mass% or more and more preferably 10 mass% or more from the perspective of forming an ink with viscoelasticity and improving the curability in the case of where it is a photosensitive resin, thereby ensuring better adhesion to the multilayer film. On the other hand, from the perspective of realizing a higher ink fluidity, the content of the binder resin in an active energy ray-curable ink is preferably 40 mass% or less and more preferably 30 mass% or less.

From the perspective of curability, the (meth)acrylate is preferably one having two or more (meth)acryloyl groups. Specific examples thereof include the tetra- or higher functional polymerizable acrylate monomers described in International Publication No. WO2014/156812 and the multifunctional (meth)acrylates described in International Publication No. WO2017/90663. Two or more of these may be contained together. For safety and environmental impact, they are preferably low in volatility.

From the perspective of enhancing curability under irradiation with an active energy ray, the content of the (meth)acrylate in the active energy ray-curable ink is preferably 10 mass% or more and 70 mass% or less.

Examples of the photopolymerization initiator include α-aminoalkyl phenones, thioxanthones, benzyl ketals, and acylphosphine oxides. Two or more of these may be used in combination. From the perspective of enhancing curability under irradiation with ultraviolet light, the content of the photopolymerization initiator in the active energy ray-curable ink is preferably 1 mass% or more. On the other hand, from the perspective of improving storage stability, the content of the photopolymerization initiator in the active energy ray-curable ink is preferably 20 mass% or less.

From the perspective of improving storage stability, it is preferable that the active energy ray-curable ink have an acrylic equivalent weight of 150 g/eq or more, more preferably 200 g/eq or more, and still more preferably 250 g/eq or more. On the other hand, from the perspective of enhancing curability under irradiation with an active energy ray, enhancing reactivity with the (meth)acryloyl group in the coating layer of the multilayer film, and further improving adhesion to the multilayer film, it is preferable that the active energy ray-curable ink have an acrylic equivalent weight of 500 g/eq or less, more preferably 450 g/eq or less, and still more preferably 400 g/eq or less. Here, for the present invention, the term "acrylic equivalent weight" refers to the weight in grams of an active energy ray-curable ink that is required in order to adjust the content of the (meth)acryloyl group in the active energy ray-curable ink to 1 mole (unit: g/eq).

For the present invention, the acrylic equivalent weight of ink decreases as the photosensitivity imparted to the binder resin increases and as the contents of components having (meth)acryloyl groups such as (meth)acrylates increase. The acrylic equivalent weight can be adjusted easily within the aforementioned range by appropriately controlling the content of each component.

Next, described below is the production method for an ink to use for the present invention. A suitable ink can be prepared by weighing and mixing/dispersing required components such as binder resin, water or solvent, (meth)acrylates, pigments, and additives. Preferable mixing and dispersing instruments include, for example, three roll mills in the case of using a high viscosity ink for offset printing, and attritors, ball mills, and sand mills in the case of using a low viscosity ink for flexographic printing, gravure printing, or inkjet printing.

For the method for producing printed matter according to the present invention, the multilayer film to use for the present invention has a metal layer and/or an inorganic compound layer along with a coating layer disposed in this order on at least one surface of a base film. The scope of this embodiment includes a multilayer film having a base film, a metal layer, and a coating layer stacked in this order; a multilayer film having a base film, an inorganic compound layer, and a coating layer stacked in this order; a multilayer film having a base film, a metal layer, an inorganic compound layer, and a coating layer stacked in this order; a multilayer film having a base film, an inorganic compound layer, a metal layer, and a coating layer stacked in this order; and a multilayer film having a base film, an inorganic compound layer, a metal layer, another inorganic compound layer, and a coating layer stacked in this order.

### (Base film)

There are no specific limitations on the resins present in the base film to use for the present invention, and examples thereof include polyester based resins such as polyethylene terephthalate, polyethylene-2,6-naphthalate, polypropylene terephthalate, and polybutylene terephthalate; polyolefin based resins such as polyethylene, polystyrene, polypropylene, polyisobutylene, polybutene, and polymethylpentene; and others such as cyclic polyolefin based resins, polyamide based resins, polyimide based resins, polyether based resins, polyesteramide based resins, polyetherester based resins, acrylic resins, polyurethane based resins, polycarbonate based resins, and polyvinyl chloride based resins, as well as biodegradable resins such as polylactic acid, polycaprolactone, polyglycolic acid, and polyvinyl alcohol. In particular, the use of a polyester based resin is preferable from the perspective of ensuring good adhesion to the inorganic compound layers and handleability, while the use of a polyolefin based resin is preferable from the perspective of ensuring recyclability. In addition, to enhance recyclability, it is preferable that recycled materials account for 3 to 55 mass% of the total amount of these resins. Here, the recycled materials may be either those recycled through mechanical recycling or those recycled through chemical recycling, and there are no particular limitations on the use thereof. Furthermore, the resins that are present in the base film may include raw materials derived from biomass (plant-derived). For example, in the case of using a polyester, it is preferable that either or both of the diol and the dicarboxylic acid that are used as its raw materials contain 10 to 95 mass% biomass-derived (plant-derived) components relative to the entire resin composition. The base film may be either an unstretched film or a stretched (uniaxial or biaxial) film, but the use of a biaxially stretched film is preferable from the perspective of thermal dimensional stability.

It is preferable that the base film to use for the present invention have a thickness of 3 µm or more and 100 µm or less, more preferably 5 µm or more and 50 µm or less, and still more preferably 8 µm or more and 30 µm or less. When the base film has a thickness of 3 µm or more, it can maintain a required rigidity to work as a support, while when its thickness is 100 µm or less, it can achieve an improved conformability while maintaining a required flexibility to work as a packaging material.

It is preferable that the polyolefin based resin film present in the base film to use for the present invention be a film that contains, as the primary component, a resin whose main structural unit is an olefin based hydrocarbon. The term "main structural unit" refers to the monomer unit that accounts for the largest part by number in the resin, and term "primary component" refers to the component that accounts for the largest part by mass among all components present in the resin. Examples of the polyolefin based resin include polymers of ethylene or an α-olefin having an alkyl group in a side chain such as propylene and 4-methyl-1-pentene, and copolymers thereof; copolymers formed through copolymerization of an α-olefin with an acrylic acid, ethylenically unsaturated group-containing carboxylic acid, ethylenically unsaturated group-containing carboxylate, or ethylenically unsaturated group-containing carboxylic acid alkyl ester; and polymers of norbornene or cyclodiene and copolymers thereof, and it may be in the form a monolayer film or a multilayer film. Among these, it is preferable that polyethylene or polypropylene be included because they are relatively low in price. The inclusion of polypropylene is more preferable in terms of heat resistance, and the inclusion of polypropylene as primary component is still more preferable from the same point of view. The polyolefin based resin film may be either in an unstretched form or in a stretched form, but the use of a biaxially stretched film is preferable from the perspective of thermal dimensional stability. It is preferable that the polyolefin based resin film have a melting point of 150°C or more. If it has a melting point of 150°C or more, it serves to prevent thermal deformation from being caused by heat used in the steps for forming a metal oxide layer or processing into packaging materials. This also ensures a higher heat resistance after the processing step, thereby suppressing deterioration in barrier properties. Here, the melting point of the polyolefin based resin film can be measured by DSC (differential scanning calorimetry) according to the procedure described below.

### <Method for measuring melting point of base film>

Using a differential scanning calorimeter (EXSTAR DSC6220, manufactured by Seiko Instruments Inc.), a 3 mg sample is heated in a nitrogen atmosphere from 30°C to 260°C at a heating rate of 20°C/min and then maintained at 260°C for 5 minutes, followed by cooling to 30°C at a cooling rate of 20°C/min. Furthermore, the sample is maintained at 30°C for 5 minutes and heated again from 30°C to 260°C at a heating rate of 20°C/min, and the peak temperature in the endothermic curve recorded during the reheating period is adopted as the melting point of the resin composition in the surface layer. Here, if a plurality of peak temperatures is observed, the highest of the temperatures is adopted as the melting point of the resin composition in the surface layer.

It is preferable that the polyolefin based resin film have a glass transition temperature (Tg) of 50°C or less. When having these features, the polyolefin based resin film has high flexibility even at low temperatures. Accordingly, it can serve as packaging material without stiffening at low temperatures and ensure stable use over a wide temperature range.

It is preferable that the polyolefin based resin film have a smooth surface. Surface smoothness can be expressed in terms of the arithmetic mean height (Sa) defined in ISO 25178(2012), and Sa is preferably 50 nm or less and more preferably 30 nm or less. The Sa can be measured by means of a non-contact type surface observation device such as scanning white light interference microscope manufactured by Hitachi High-Tech Science Corporation. If it has a smooth surface, it serves to reduce defects in the inorganic oxide layer disposed on the surface to form an excellent inorganic oxide layer, thereby ensuring improved barrier properties.

### (Metal layer and/or inorganic compound layer)

It is preferable that the metal layer and/or inorganic compound layer contain one or more elements selected from Groups 2 to 14 (excluding carbon) in the periodic table and that the inorganic compound layer further contain at least either of oxygen or nitrogen. Among these, aluminum is preferably present in the metal layer from the perspective of processing cost and gas barrier properties, and it is more preferable that aluminum be present as the main component. In addition, from a similar point of view, it is preferable that the inorganic compound layer contain one or more selected from the group consisting of aluminum, magnesium, titanium, tin, indium, and silicon, of which the inclusion of silicon or aluminum is more preferable. For the inorganic compound layer, preferable materials include, for example, silicon oxide, silicon oxynitride, and aluminum oxide. Furthermore, in the inorganic oxide layer, it is preferable for aluminum to account for 50 atomic% or more of the total quantity of all elements (excluding carbon) of Groups 2 to 14 in the periodic table.

When a metal layer as described above is present, the thickness of the metal layer is preferably 5 nm or more and 500 nm or less and more preferably 10 nm or more and 100 nm or less. If its thickness is 5 nm or more, it serves to ensure improved barrier properties, whereas if it is 500 nm or less, it serves to prevent the base material from suffering thermal damage during the film formation step, therefore they are preferable.

When an inorganic compound layer as described above is present, the thickness of the inorganic compound layer is preferably 2 nm or more and 50 nm or less, more preferably 2 nm or more and 20 nm or less, and still more preferably 4 nm or more and 10 nm or less. If its thickness is 2 nm or more, it serves to reduce defects such as pinholes, whereas if it is 50 nm or less, it serves to suppress the formation of cracks.

### (Coating layer)

The coating layer to use for the present invention preferably includes a water-soluble resin and a hydrolysate of a metal alkoxide and/or a polycondensate thereof.

It is preferable for the water-soluble resin to include one or more segments selected from the group consisting of segments derived from vinyl alcohol-based resins, segments derived from polysaccharides, and segments derived from acrylic polyol resins. It is preferable that the segments derived from vinyl alcohol-based resins, the segments derived from polysaccharides, and the segments derived from acrylic polyol resins be vinyl alcohol-based resins, such polysaccharides as methyl cellulose, and acrylic polyol based resins, respectively, of which the use of a vinyl alcohol-based resin is more preferable because it can ensure improved oxygen barrier properties. Examples of the vinyl alcohol-based resin include polyvinyl alcohol, ethylene-vinyl alcohol copolymers, and modified polyvinyl alcohols, which may be used alone or as a mixture of two or more thereof. It is preferable for the vinyl alcohol-based resin to have an average molecular weight (as specified in JIS K 6726(1994)) of 500 or more and 3,000 or less. If the molecular weight is smaller than this, the polymer may not be sufficiently fixed in the layer, possibly leading to deteriorated barrier properties.

In general, the vinyl alcohol-based polymer can be produced by saponifying polyvinyl acetate, and may be either in a partially saponified form, which is produced by saponifying only part of the acetic acid groups, or in the fully saponified form, wherein a higher degree of saponification is more preferable. The degree of saponification (as specified in JIS K 6727(1994)) is preferably 90% or more and more preferably 95% or more. A higher degree of saponification is more preferable because the number of acetic acid groups with larger steric hindrance is smaller to decrease the free volume in the coating layer and increase the crystallinity of the resin, which is advantageous for improving the barrier properties.

The term "modified polyvinyl alcohol resin" refers to a resin produced through chemical reaction of polyvinyl alcohol with a monomer having a different chemical structure or through its copolymerization with a monomer having a different chemical structure. Examples of the modified polyvinyl alcohol resin include vinyl ester based ones such as vinyl acetate and vinyl propionate, carboxylic acid based ones, methacrylic ester based ones, vinyl ether based ones such as methylvinyl ether, and glycol based ones.

Analysis of segments derived from vinyl alcohol-based resins, segments derived from polysaccharides, and segments derived from acrylic polyol resins can be performed by the procedure as described below. A film-like test piece is immersed in deuterated isopropanol to dissolve the coating layer composition in the solvent, or the coating layer is scraped physically with a spatula etc. to prepare a test piece, which is then dissolved in deuterated isopropanol. Whether the coating layer is dissolved properly or whether the coating layer is scraped properly is checked based on the thickness of the coating layer as in the case of the film thickness evaluation method described later. Then, the test piece dissolved in the solvent is analyzed by ¹³C-NMR and the presence or absence of each segment is determined based on peak assignment.

The term "metal alkoxide" refers to one or more selected from the group consisting of silicon alkoxides as represented by Si(OR)₄, which is a segment containing an Si-O bond, hydrolysates of silicon alkoxides, and polycondensates of hydrolysates of silicon alkoxides, and/or those as represented by the general formula M(OR)ₙ. In the formula, n is a natural number and M is a metal atom, which is particularly preferably titanium, aluminum, or zirconium. Here, R is an alkyl group, which is preferably a lower alkyl group containing 1 to 4 carbon atoms. In particular, tetramethoxysilane, tetraethoxysilane, tetrapropoxysilane, and tetrabutoxysilane can be used suitably from the perspective of reactivity, stability, and cost, and they may be used alone or as a mixture of two or more thereof. These metal alkoxides may be hydrolyzed to form networks or may be polycondensed.

The hydrolysis and/or polycondensation of the metal alkoxides can be conducted in the presence of water, a catalyst, and an organic solvent. The amount of water to use for the reaction is preferably 0.8 equivalent or more and 5 equivalents or less relative to the alkoxy groups of Si(OR)₄ and/or M(OR)ₙ. If the amount of water is 0.8 equivalent or more, it is preferable because it allows hydrolysis to be promoted sufficiently to ensure network formation. If the amount of water is 5 equivalents or less, it is preferable because it serves to control the extent of hydrolysis to suppress random network formation, thus reducing the free volume in the film to improve the barrier properties.

It is preferable that the catalyst used for the reaction of the metal alkoxides be an acid catalyst. Examples of good acid catalysts include, but not limited to, hydrochloric acid, sulfuric acid, nitric acid, phosphoric acid, acetic acid, and tartaric acid. Normally, both acid catalysts and basic catalysts can be useful to promote the hydrolysis and polycondensation of metal alkoxides. However, when an acid catalyst is used, the monomers present in the system tend to be hydrolyzed in a more uniform manner, promoting the formation of linear or network structures through condensation. On the other hand, when a basic catalyst is used, the reaction mechanism that occurs tends to work in such a manner that hydrolysis and polycondensation reactions of alkoxides bonded to the same molecule are allowed to proceed easily. Accordingly, the resulting reaction product tends to be in the form of particles that have a large free volume and contain many voids. Since these voids in the film work as permeation paths for water vapor and oxygen, it is preferable to use an acid catalyst. The amount of the catalyst to use is preferably 0.1 mol% or more and 0.5 mol% or less relative to the total amount by mole of the metal alkoxide.

Examples of organic solvents to use for the reaction of the metal alkoxide include water and alcohols that can mix with metal alkoxides such as methyl alcohol, ethyl alcohol, n-propyl alcohol, isopropyl alcohol, and n-butyl alcohol.

Commercial products of silicate oligomers and polysiloxanes can also be used as polycondensates of metal alkoxides. These silicate oligomers and polysiloxanes may be used alone or mixed with low molecular weight metal alkoxides, but it is preferable to use them as mixtures with low molecular weight metal alkoxides in order to prevent cracking from being caused by excessive crosslinking. Here, also in the case where silicate oligomers or polysiloxanes are used, it is preferable to adopt those having linear or network structures because the resulting film is expected to have a smaller free volume to ensure improved barrier properties.

For the metal alkoxide, the presence of segments containing Si-O or M-O bonds can be examined by conducting FT-IR-ATR analysis of the film surface and performing peak assignment.

The coating layer to use for the present invention can be formed by preparing a coating agent as a mixture of the water-soluble resin with a hydrolysate and/or a polycondensate of the metal alkoxide and applying it onto the metal layer and/or the inorganic compound layer, followed by drying. In regard to the relative amounts of the resin and the hydrolysate and/or polycondensate of the metal alkoxide present in the film, in terms of the mass of the resin and that of the metal alkoxide which is assumed to have its central atom completely oxidized (converted mass of SiO₂ or MOₙ), it is preferable that the ratio of the mass of the resin to the converted mass of the oxide of the metal alkoxide be in the range of 15/85 to 85/15, more preferably 20/80 to 65/35, still more preferably 20/80 to 40/60, and particularly preferably 20/80 to 50/50. If this ratio is 15/85 or more, it is preferable because the film is prevented from suffering crack formation as a result of becoming brittle due to the hydrolysate and/or polycondensate of the excess metal alkoxide. If it is 85/15 or less, it is preferable because the hydrolysate and/or polycondensate of the metal alkoxide can form a network structure that serves to fix the resin and prevent a deterioration in water vapor barrier properties.

In the case of the coating layer, which includes the water-soluble resin and the hydrolysate and/or a polycondensate of the metal alkoxide, a (meth)acryloyl group can be introduced into the coating layer by adding a silane coupling agent having the (meth)acryloyl group to the coating agent, which is prepared by mixing the water-soluble resin with the hydrolysate and/or polycondensate of the metal alkoxide. If (meth)acryloyl groups are present in the coating layer, such (meth)acryloyl groups in the coating layer can form crosslinks with the active energy ray-curable ink through radical polymerization during the step for forming a print layer on the coating layer using the active energy ray-curable ink, thereby leading to better adhesion between the coating layer and the print layer.

It is preferable that the coating layer to use for the present invention contain silicon and a (meth)acryloyl group. The (meth)acryloyl group can work to develop better adhesion between the active energy ray-curable ink and the film, and therefore, it preferably accounts for 0.25 mol% or more, more preferably 0.30 mol% or more, of the entire quantity by mole of silicon present in the coating layer. On the other hand, it is preferably 1.25 mol% or less and more preferably 1.10 mol% or less in order to allow good barrier properties to be maintained. This is because (meth)acryloyl groups have greater free volume than alkoxides having 4 or less carbon atoms and hydroxyl groups formed as hydrolysates thereof and the size of the voids in the coating layer increases with an increasing amount of their amounts added, which can result in deterioration in gas barrier properties.

### (Multilayer film)

For the present invention, the multilayer film to use has a ratio X/Y of 5 or more and 300 or less, where X is an emission peak intensity measured through the coating layer under the conditions described below and Y is a reference peak emission intensity:

### <Measuring conditions>

the surface of the coating layer of the multilayer film is brought into contact with a tetrahydrofuran (THF) solution of 4-nitro-7-piperazino-2,1,3-benzoxadiazole with a concentration of 1 × 10⁻⁴ mol/L at 60°C for 30 minutes; a piece of 15 mm × 15 mm is cut out; and an emission spectrum is measured at an excitation wavelength of 470 nm to determine the maximum value observed in the wavelength range of 520 to 550 nm to represent the emission peak intensity X;

### <Reference peak>

the emission peak intensity in the range of 520 to 550 nm measured from the THF solution of 4-nitro-7-piperazino-2,1,3-benzoxadiazole with a concentration of 1 × 10⁻⁵ mol/L is adopted as reference emission peak intensity Y.

Since the aforementioned (meth)acryloyl group is an α, β-unsaturated carbonyl compound, it is possible to convert it into a 3-aminopropionate structure through conjugate 1,4-addition of primary or secondary amines that are high in nucleophilicity (Michael addition reaction). By utilizing this reaction, 4-nitro-7-piperazino-2,1,3-benzoxadiazole, which is a fluorescent dye having a secondary amino group, can be selectively introduced into the (meth)acryloyl group, making it possible to quantify the (meth)acryloyl groups in the film. The fluorescent dye has one secondary amino group and accordingly, it reacts with the (meth)acryloyl group in the ratio of 1:1 by equivalent. Because it is a highly nucleophilic aliphatic amine, the reaction proceeds without a catalyst at room temperature. Furthermore, it absorbs light in the visible range of 400 nm or more and gives fluorescence emission, and therefore, it can be detected by a spectroscopic technique.

If a (meth)acryloyl group exists in certain quantities in the coating layer used for the present invention, it works to improve adhesion to the ink. For the present invention, a focus was placed on ratio X/Y between the emission peak intensity X and the reference emission peak intensity Y as an index for the quantity of the (meth)acryloyl group in the coating layer. If the ratio X/Y is less than 5, it leads to poor adhesion between the ink and the multilayer film. The ratio X/Y is more preferably 18 or more. On the other hand, if the ratio X/Y is more than 300, the quantity of (meth)acryloyl groups increases in the coating layer and the voids present in the layer become larger, leading to deterioration in gas barrier properties. Furthermore, in the case of a drying type ink that develops adhesiveness by intermolecular force, such as polyurethane based inks, the adhesion to the ink decreases. It is more preferable for the ratio X/Y to be 100 or less.

In the case where the drying type ink contains a polyurethane resin that has a primary or secondary amino group, the (meth)acryloyl group present in the coating layer used for the present invention will form covalent bonds as it undergoes the Michael addition reaction through a similar mechanism, thereby leading to a further increase in adhesion between the drying type ink layer and the multilayer film.

The thickness of the coating layer to use for the present invention is preferably 200 nm or more and 600 nm or less and more preferably 200 nm or more and 500 nm or less. If it has a thickness of 200 nm or more, it serves to provide defect-free coverage over the metal layer and/or the inorganic compound layer to ensure enhanced barrier properties. If it has a thickness of 600 nm or less, it is preferable because it serves to prevent cracking or insufficient curing from being caused by thermal shrinkage that occurs during the curing step.

It is preferable that the multilayer film to use for the present invention have a water vapor transmission rate of 1.0 g/m²/24 hr or less, more preferably less than 0.6 g/m²/24 hr, still more preferably 0.5 g/m²/24 hr or less, and most preferably less than 0.4 g/m²/24 hr. In addition, it is preferable that its oxygen transmission rate be 1.0 cc/m²/24 hr or less, more preferably less than 0.6 cc/m²/24 hr, still more preferably less than 0.4 cc/m²/24 hr, and most preferably 0.3 cc/m²/24 hr or less. For the water vapor transmission rate and the oxygen transmission rate, lower values are better, and although there are no particular limitations on their lower limits, they are practically 0.01 g/m²/24 hr for the water vapor transmission rate and 0.01 cc/m²/24 hr for the oxygen transmission rate. It is preferable that the water vapor transmission rate be 1.0 g/m²/24 hr or less and that the oxygen transmission rate be 1.0 cc/m²/24 hr or less because, when the film is used as packaging material, this serves to prevent the packaged contents from suffering degradation due to moisture absorption or oxidation.

It is preferable that the multilayer film to use for the present invention be produced by forming a metal layer and/or an inorganic compound layer on at least one surface of a base film and subsequently forming a coating layer on top thereof. The formation of a metal layer and/or an inorganic compound layer can be carried out by a generally known method such as vacuum deposition, sputtering, ion plating, and plasma chemical vapor deposition. In particular, from the perspective of rapid film formation with high productivity, the use of the deposition method is preferable. Available techniques for the vacuum deposition method include electron beam (EB) deposition, resistance heating, and induction heating, although the present invention is not limited thereto. It should be noted that when forming a metal layer and/or an inorganic compound layer on a pair of long film rolls, the main roll used for deposition is preferably cooled in order to prevent the film from thermal damage. Its temperature is preferably 20°C or less and more preferably 0°C or less. The metal layer may be formed by, for example, adopting the intended metal as the raw material in performing a deposition technique. To form an inorganic compound layer, good methods include, for example, to select a compound having a desired composition for use as raw material, followed by subjecting it to vapor deposition, and to apply a metal, selected as raw material, to vapor deposition, followed by introducing a reactive gas into the deposited metal vapor to form an inorganic compound. For example, in the case of forming an aluminum oxide layer, aluminum is used as raw material for vapor deposition, and a gas containing oxygen is introduced into the evaporated aluminum vapor to form an inorganic oxide layer on a base film. The gas to be introduced only needs to contain a gas having appropriate components that react with the evaporated metal and is incorporated into the layer, and it may also contain an inert gas or the like for the purpose of controlling the film quality. The surface of the base film on which the metal layer and/or the inorganic compound layer is to be formed may be subjected to surface modification treatment in order to achieve a higher interlayer adhesion strength. The surface modification treatment may be conducted by either an in-line process or an off-line process. The modification treatment method to use is not particularly limited, but examples thereof include generally known methods such as corona treatment, plasma treatment, ion beam treatment, and flame treatment. These surface modification treatment techniques may be performed in an atmosphere selected from various gases such as air, argon, nitrogen, oxygen, carbon dioxide, hydrogen, ammonia, hydrocarbons (CₙH₂ₙ₊₂, where n is an integer of 1 to 4), and mixed gases thereof. A useful gas to use for surface modification treatment can be selected based on factors such as electrical discharge characteristics, the energy of the active species to be obtained, and the type of the desired functional group to be introduced. In order to introduce a functional group, it is preferable for the gas to include carbon dioxide gas, oxygen gas, or such gases as argon or nitrogen which enable stable discharge.

It is preferable that the multilayer film to use for the present invention be produced by a production method that includes a step for preparing a base film having an inorganic compound layer on at least one surface thereof and applying a coating agent containing a water-soluble resin, a hydrolysate of a metal alkoxide and/or a polycondensate thereof, and a silane coupling agent having a (meth)acryloyl group to the surface of the inorganic compound layer, and a step for drying it. According to this embodiment, good adhesion can be achieved regardless of the type of ink used when a print layer is formed on the multilayer film, and this also allows the multilayer film to have good barrier properties.

It is preferable that the multilayer film to use for the present invention be produced by a production process including a step for preparing a polyolefin based resin as base film that has an inorganic compound layer on at least one surface thereof and applying a coating agent containing a water-soluble resin, a hydrolysate of a metal alkoxide and/or a polycondensate thereof, and a silane coupling agent having a (meth)acryloyl group to the surface of the inorganic compound layer, and a step for drying it.

It is preferable that the multilayer film to use for the present invention be produced by a production process including a step for preparing a polyolefin based resin as base film that has an inorganic compound layer on at least one surface thereof and applying a coating agent containing one or more selected from silicon alkoxides, hydrolysates of silicon alkoxides, and polycondensates of hydrolysates of silicon alkoxides, one or more selected from vinyl alcohol-based resins, polysaccharides, and acrylic polyol resins, a silane coupling agent having a (meth)acryloyl group, and a compound incorporating a metal element M, to the surface of the inorganic compound layer, and a step for drying it. According to this embodiment, good adhesion can be achieved regardless of the type of ink used when a print layer is formed on the multilayer film, and this also allows the multilayer film to have good barrier properties. Furthermore, this serves to produce a multilayer film having good water vapor barrier properties and oxygen barrier properties while suppressing environmental impact during the production process. In particular, this embodiment is preferable because it realizes sufficient curing at low temperatures and, even at high temperatures, serves to achieve sufficient curing in a short period, thereby ensuring reduced environmental impact during the production process.

There are no particular limitations on the technique to use for applying the coating agent, and generally known ones can be adopted including the direct gravure method, reverse gravure method, micro gravure method, rod coating method, bar coating method, die coating method, and spray coating method. The temperature for drying to be performed after the application step is preferably 70°C or more and 150°C or less and more preferably 90°C or more and 130°C or less. Here, the drying temperature means the maximum temperature that is reached on the surface of the film. If it is 70°C or more, it serves to remove the solvent to form a layer, whereas if it is 150°C or less, it serves to prevent thermal shrinkage and deformation of the polyolefin based resin film used as the base film. After the application and drying steps, a heat treatment step may be further performed in order to promote polycondensation of the silicon alkoxide to ensure improved barrier properties. The heat treatment step is preferably performed at a temperature of 30°C or more and 100°C or less and more preferably 40°C or more and 80°C or less. The heat treatment time is preferably 1 day or more and 14 days or less and more preferably 3 days or more and 7 days or less. If the heat treatment temperature is 30°C or more, it serves to promote the crosslinking in the coating layer to ensure improved barrier properties, whereas if it is 100°C or less, it serves to prevent the film from suffering curling and shrinkage caused by heat treatment. Here, the heat treatment temperature means the temperature of the atmosphere.

It is preferable that the multilayer film to use for the present invention be designed for use as packaging material. To provide good packaging material, it may be laminated with a heat seal layer to allow for printing, bag formation, etc., or another resin film to enhance rigidity. Furthermore, to ensure higher recyclability, the base film, heat seal layer, and the additional resin film designed for rigidity enhancement are preferably made of polyolefin based resin.

(Transfer Method) As methods for transferring ink onto the coating layer in the present invention, for full-surface coating, application methods using a varnish coater or a bar coater, for example, can be mentioned. In the case where pattern printing is necessary, examples of good printing techniques include flexographic printing, lithographic printing, gravure printing, screen printing, and inkjet printing. It is preferable to select a good printing technique to suit the viscosity and type of ink to use, and for example, lithographic printing and screen printing are preferable when using a high viscosity ink of 5 Pa·s or more and 200 Pa·s or less. Flexographic printing is preferable when using an ink of 0.1 Pa·s or more and less than 5 Pa·s, whereas gravure printing and inkjet printing are preferable when using a low viscosity ink of less than 0.1 Pa·s. In general, inks of lower viscosity are more preferable because they have better leveling properties to ensure better appearance after ink transfer. On the other hand, these printing techniques may be used singly or a plurality thereof may be used in combination. Furthermore, in the case where a drying type ink is used, it is preferably applied by gravure printing, flexographic printing, or inkjet printing, whereas when an active energy ray-curable ink is used, it is preferably applied by flexographic printing, lithographic printing, or inkjet printing. The waterless offset lithographic printing technique may be used when lithographic printing is performed.

Furthermore, multiple inks of different colors are generally used for design purposes. Examples of a printing machine that has multiple printing units include line type printing machines and central drum type printing machines. A central drum type machine has a single impression cylinder that is designed to hold the printed sheet and located opposite to the transfer and impression cylinders designed to transfer ink. When a central drum type printing machine is used, it eliminates the need for guide rolls for conveying the film between cylinders and therefore, it is suitable for wet-on-wet printing processes.

From the perspective of ensuring higher printing density, the thickness of transferred ink is preferably 0.1 µm or more. On the other hand, from the perspective of preventing insufficient drying and poor curing, the thickness of the transferred ink is preferably 10 µm or less.

### (Drying step)

Next, the drying step is described below. When a drying type ink is used, it is preferable that the water and solvent contained in the drying type ink transferred on the multilayer film be removed by heating and drying in the drying step. Examples of heat-drying machines include hot air dryers commonly used in flexographic and gravure printing machines, as well as IR dryers. If a hydroxyl group-containing compound such as water is present as a volatile component, it can be removed by using an IR dryer. In general, such dryers are installed between each pair of adjacent printing units so that drying is conducted separately for each color, thereby enabling a dry-on-wet printing process.

### (Curing process)

Next, the curing step is described below. In the case of using an active energy ray-curable ink, it is preferable to cure the ink by irradiating it with an active energy ray in the curing step. Examples of the active energy ray include ultraviolet ray (LED-UV in particular), electron beam, and gamma ray. Radiations such as electron beam and gamma ray generate high energy secondary electrons in the irradiated substance and excite surrounding molecules to produce activated species such as radicals. Accordingly, as radicals are generated in an active energy ray-curable ink, radical polymerization is accelerated and the ink is cured to form an ink coat. Electron beams are particularly preferable because they are low in required acceleration voltage, undergo sufficient penetration into the transferred ink coat, give sufficient energy for curing, require no special operator certification, and allow for easy handling.

Furthermore, electron beams can work directly to excite the (meth)acryloyl groups present in the coating layer to promote their radical polymerization with the ink, thereby further enhancing the adhesion between the ink and the multilayer film.

The penetration depth of an electron beam depends on the acceleration voltage, and accordingly, the acceleration voltage of the electron beam is preferably 50 kV or more to allow a sufficient dose to pass through the ink coat. On the other hand, the acceleration voltage of the electron beam is preferably 150 kV or less because the dose influencing the interior of the multilayer film also increases with an increasing penetration depth.

In addition, the electron beam irradiation dose is preferably 20 kGy or more and 50 kGy or less.

### EXAMPLES

The present invention is described in more detail below with reference to examples. However, it should be noted that the present invention should not be construed as being limited to these examples.

### [Measurement and evaluation methods]

### (1) Ratio X/Y between emission intensity X and reference emission peak intensity Y

A multilayer film was cut to a size of 40 mm × 40 mm and the coating layer side was brought into contact with a THF solution of 4-nitro-7-piperazino-2,1,3-benzoxadiazole with a concentration of 1 × 10⁻⁴ mol/L at 60°C for 30 minutes. Then, the film was immersed and washed twice in THF, and the four corners of the film piece washed above were trimmed off to a size of 15 mm × 15 mm. It was fixed on a quartz plate to provide a measurement sample. Fluorescence from the measurement sample was measured using a fluorescence phosphorescence spectrophotometer (FluoroMax-4P, manufactured by Horiba Ltd.) with 470 nm excitation light, 2 nm excitation light slit, and 2 nm emission slit, over a detection range of 500 to 700 nm. If a peak in emission intensity appeared in the range of 520 to 550 nm, that peak intensity was taken as emission intensity X.

In addition, the peak in emission intensity that appeared in the range of 520 to 550 nm when analyzing a THF solution of 4-nitro-7-piperazino-2,1,3-benzoxadiazole with a concentration of 1 × 10⁻⁵ mol/L was determined and adopted as reference emission peak intensity Y, followed by calculating the ratio X/Y between the emission intensity X and the reference emission peak intensity Y.

### (2) Measurement of oxygen transmission rate

A multilayer film sample was subjected to oxygen transmission rate measurement using an oxygen transmission rate measuring apparatus (OXTRAN (registered trademark) 2/20, manufactured by MOCON/ModernControls) according to the isobaric method specified in JIS K 7126-2 (2006) under the conditions of a temperature of 23°C and a humidity of 90%RH. Two measurements were taken from each of two test pieces and the average of the measurements taken was calculated and adopted to represent the oxygen transmission rate (in cc/m²/24 hr) of the multilayer film.

If the oxygen transmission rate is more than 1.0, it indicates insufficient oxygen barrier properties, whereas if it is 0.6 or more and 1.0 or less, it indicates good oxygen barrier properties. If it is 0.4 or more and less than 0.6, it indicates better oxygen barrier properties, and if it is less than 0.4, it indicates excellent oxygen barrier properties.

### (3) Measurement of water vapor transmission rate

A multilayer film sample was subjected to water vapor transmission rate measurement using a water vapor transmission rate measuring apparatus (PERMATRAN (registered trademark) W3/31, manufactured by MOCON/ModernControls) according to the B method specified in JIS K 7129 (2008) under the conditions of a temperature of 40°C and a humidity of 90%RH. Two measurements were taken from each of two samples and the average of the measurements taken was calculated and adopted to represent the water vapor transmission rate (in g/m²/24 hr) of the multilayer film.

If the water vapor transmission rate is more than 1.0, it indicates insufficient water vapor barrier properties, whereas if it is 0.6 or more and 1.0 or less, it indicates good water vapor barrier properties. If it is 0.4 or more and less than 0.6, it indicates better water vapor barrier properties, and if it is less than 0.4, it indicates excellent water vapor barrier properties.

### (4) Peel strength

Solid printed samples prepared in Examples 1 to 14, 16, and 18 to 38 and Comparative examples 1 to 7 were coated with a mixed lamination adhesive (TAKERAC (registered trademark) A626/TAKENATE (registered trademark) A50, manufactured by Mitsui Chemicals, Inc.) at a coating weight of 3.0 g/m², and then, they were laminated with an unstretched polypropylene film (CPP) (ZK-207, manufactured by Toray Advanced Film Co., Ltd.,) with a thickness of 60 µm. Subsequently, they were aged at 40°C for 3 days to provide laminated samples. A strip with a width of 15 mm was cut out from the ink-coated part of the resulting laminated sample and subjected to peeling test using a Tensilon (registered trademark) universal testing machine (RTG-1210, manufactured by Orientec Co., Ltd.). Peeling was performed at an angle of 90°at a rate of 300 mm/min to determine the peel strength. Two measurements were taken and their average was calculated and used for evaluation of adhesion.

The sample was judged to have insufficient adhesion if the peel strength was less than 2.0 N/15 mm, good adhesion if it was 2.0 N/15 mm or more and less than 3.0 N/15 mm, better adhesion if it was 3.0 N/15 mm or more and less than 4.0 N/15 mm, still better adhesion if it was 4.0 N/15 mm or more and less than 5.0 N/15 mm, and excellent adhesion if it was 5.0 N/15 mm or more.

### (5) Peelability from printed sample

Solid printed samples were prepared in Examples 15 and 17 in which an ink for surface printing was used. A 30 mm × 18 mm area was randomly selected on each sample and a piece of Cellotape (registered trademark) No.405 (18 mm width), manufactured by Nichiban Co., Ltd., was pasted. Then, it was peeled by hand and the peelability was evaluated according to the following criteria. The degree of adhesion was determined based thereon.
A: The ink film was not peeled off.
B: Partial peeling of the ink film was found.

### (6) Abrasion resistance of printed sample

Printed samples were prepared in Examples 15 and 17 in which an ink for surface printing was used. A 30 mm × 30 mm area was randomly selected on each sample and the surface was rubbed 20 times back and forth with human fingernails. Evaluations of abrasion resistance were made according to the criteria described below.
A. Scratches caused by fingernails were not found.
B. Part of the sample was found to suffer peeling of the ink film along scratches caused by fingernails.

### [Multilayer film]

Multilayer films 1 to 15 were prepared according to the procedure described below.

### Multilayer film 1: (formation of metal layer or inorganic compound layer)

As the inorganic compound layer, an aluminum oxide layer of 7 nm was formed on one side of a biaxially stretched polyethylene terephthalate film (LUMIRROR (registered trademark) P60, manufactured by Toray Industries, inc.) having a thickness of 12 µm. The aluminum oxide layer was formed by a reactive vapor deposition technique in which aluminum is evaporated and oxygen is introduced into the deposited part to cause oxidation.

### (Formation of coating layer)

Polyvinyl alcohol (Poval (registered trademark) 28-98, manufactured by Kuraray Co., Ltd., hereinafter occasionally abbreviated to as PVA), which was adopted as the water-soluble polymer, was added into a solvent composed of water and isopropyl alcohol mixed at 97/3 by mass, and heated while stirring at 90°C to provide a water-soluble polymer liquid having a solid content of 10 mass%. Then, 6.7 g of tetraethoxysilane (hereinafter occasionally abbreviated as TEOS) and 2.7 g of methanol were mixed to prepare a solution, and 10.6 g of 0.02 N aqueous hydrochloric acid was added dropwise while stirring to provide a TEOS hydrolysis solution.

The water-soluble polymer liquid and the TEOS hydrolysis solution were mixed in such a manner that the PVA solid content in the water-soluble polymer liquid and the SiO₂ converted mass of TEOS gave a PVA solid content/SiO₂ converted mass ratio of 35/65. It was diluted with water to provide a coating liquid having an overall solid content of 13 mass%. The coating liquid was applied to the aluminum oxide layer described above, dried at 150°C for 1 minute, and then heat-treated at 80°C for 1 week to provide a multilayer film 1.

### Multilayer film 2: (formation of metal layer or inorganic compound layer)

As the inorganic compound layer, an aluminum oxide layer of 7 nm was formed on one side of a biaxially stretched polyethylene terephthalate film (LUMIRROR (registered trademark) P60, manufactured by Toray Industries, inc.) having a thickness of 12 µm. The aluminum oxide layer was formed by a reactive vapor deposition technique in which aluminum is evaporated and oxygen is introduced into the deposited part to cause oxidation.

### (Formation of coating layer)

PVA (Poval (registered trademark) 28-98, manufactured by Kuraray Co., Ltd.), which was adopted as the water-soluble polymer, was added into a solvent composed of water and isopropyl alcohol mixed at 97/3 by mass, and heated while stirring at 90°C to provide a water-soluble polymer liquid having a solid content of 10 mass%. Then, 6.7 g of TEOS and 2.7 g of methanol were mixed to prepare a solution, and 10.6 g of 0.02 N aqueous hydrochloric acid was added dropwise while stirring to provide a TEOS hydrolysis solution. In addition, 6.1 g of 3-acryloxypropyl trimethoxysilane (KBM-5103, manufactured by Shin-Etsu Chemical Co., Ltd.) and 10.6 g of methanol was mixed to provide a solution, and 2.4 g of 0.1 N aqueous hydrochloric acid was added dropwise while stirring to prepare a hydrolysis solution containing (meth)acryloyl groups.

The water-soluble polymer liquid and the TEOS hydrolysis solution were mixed in such a manner that the PVA solid content in the water-soluble polymer liquid and the SiO₂ converted mass of TEOS gave a PVA solid content/SiO₂ converted mass ratio of 35/65. Then, the hydrolysis solution containing (meth)acryloyl groups was added to the resulting mixed liquid in such a manner that it accounted for 0.15 part by mass relative to 100 parts by mass of the TEOS hydrolysis solution (corresponding to 0.17 mol% (meth)acryloyl groups per 1 mole of silicon) and the liquid was diluted with water to provide a coating liquid having an overall solid content of 13 mass%. The coating liquid was applied to the aluminum oxide layer described above, dried at 150°C for 1 minute, and then heat-treated at 80°C for 1 week to provide a multilayer film 2.

Multilayer film 3: Except that the hydrolysis solution containing (meth)acryloyl groups to use for coating layer formation accounted for 0.25 part by mass relative to 100 parts by mass of the TEOS hydrolysis solution (corresponding to 0.28 mol% (meth)acryloyl groups per 1 mole of silicon), the same procedure as for the multilayer film 2 was carried out for the production thereof.

Multilayer film 4: Except that the hydrolysis solution containing (meth)acryloyl groups to use for coating layer formation accounted for 0.30 part by mass relative to 100 parts by mass of the TEOS hydrolysis solution (corresponding to 0.34 mol% (meth)acryloyl groups per 1 mole of silicon), the same procedure as for the multilayer film 2 was carried out for the production thereof.

Multilayer film 5: Except that the hydrolysis solution containing (meth)acryloyl groups to use for coating layer formation accounted for 0.50 part by mass relative to 100 parts by mass of the TEOS hydrolysis solution (corresponding to 0.56 mol% (meth)acryloyl groups per 1 mole of silicon), the same procedure as for the multilayer film 2 was carried out for the production thereof.

Multilayer film 6: Except that the hydrolysis solution containing (meth)acryloyl groups to use for coating layer formation accounted for 0.70 part by mass relative to 100 parts by mass of the TEOS hydrolysis solution (corresponding to 0.79 mol% (meth)acryloyl groups per 1 mole of silicon), the same procedure as for the multilayer film 2 was carried out for the production thereof.

Multilayer film 7: Except that the hydrolysis solution containing (meth)acryloyl groups to use for coating layer formation accounted for 0.90 part by mass relative to 100 parts by mass of the TEOS hydrolysis solution (corresponding to 1.01 mol% (meth)acryloyl groups per 1 mole of silicon), the same procedure as for the multilayer film 2 was carried out for the production thereof.

Multilayer film 8: Except that the hydrolysis solution containing (meth)acryloyl groups to use for coating layer formation accounted for 1.0 part by mass relative to 100 parts by mass of the TEOS hydrolysis solution (corresponding to 1.12 mol% (meth)acryloyl groups per 1 mole of silicon), the same procedure as for the multilayer film 2 was carried out for the production thereof.

Multilayer film 9: Except that the hydrolysis solution containing (meth)acryloyl groups to use for coating layer formation accounted for 1.5 parts by mass relative to 100 parts by mass of the TEOS hydrolysis solution (corresponding to 1.68 mol% (meth)acryloyl groups per 1 mole of silicon), the same procedure as for the multilayer film 2 was carried out for the production thereof.

Multilayer film 10: Except that the hydrolysis solution containing (meth)acryloyl groups to use for coating layer formation accounted for 5.0 part by mass relative to 100 parts by mass of the TEOS hydrolysis solution (corresponding to 5.59 mol% (meth)acryloyl groups per 1 mole of silicon), the same procedure as for the multilayer film 2 was carried out for the production thereof.

Multilayer film 11: Except that the hydrolysis solution containing (meth)acryloyl groups to use for coating layer formation accounted for 17.0 parts by mass relative to 100 parts by mass of the TEOS hydrolysis solution (corresponding to 18.72 mol% (meth)acryloyl groups per 1 mole of silicon), the same procedure as for the multilayer film 2 was carried out for the production thereof.

Multilayer film 12: Except that the hydrolysis solution containing (meth)acryloyl groups used for coating layer formation was replaced with a hydrolysis solution containing isocyanate groups (which contained 3-isocyanate propyltriethoxysilane (X-12-1308ES, manufactured by Shin-Etsu Chemical Co., Ltd., with isocyanate protecting group) instead of 3-acryloxypropyl trimethoxysilane (KBM-5103, manufactured by Shin-Etsu Chemical Co., Ltd.)), which was added in such a manner that the isocyanate groups accounted for 1.12 mol% per 1 mole of silicon in the coating layer, the same procedure as for the multilayer film 2 was carried out for the production thereof.

Multilayer film 13: Except that the hydrolysis solution containing (meth)acryloyl groups used for coating layer formation was replaced with a hydrolysis solution containing vinyl groups (which contained vinyltriethoxysilane (KBE-1003, manufactured by Shin-Etsu Chemical Co., Ltd.) instead of 3-acryloxypropyl trimethoxysilane (KBM-5103, manufactured by Shin-Etsu Chemical Co., Ltd.)), which was added in such a manner that the vinyl groups accounted for 1.12 mol% per 1 mole of silicon in the coating layer, the same procedure as for the multilayer film 2 was carried out for the production thereof.

Multilayer film 14: Except that the hydrolysis solution containing (meth)acryloyl groups used for coating layer formation was replaced with a hydrolysis solution containing epoxy groups (which contained 3-glycidoxypropyl trimethoxysilane (KBE-403, manufactured by Shin-Etsu Chemical Co., Ltd.) instead of 3-acryloxypropyl trimethoxysilane (KBM-5103, manufactured by Shin-Etsu Chemical Co., Ltd.)), which was added in such a manner that the epoxy groups accounted for 1.12 mol% per 1 mole of silicon in the coating layer, the same procedure as for the multilayer film 2 was carried out for the production thereof.

Multilayer film 15: Except that the hydrolysis solution containing (meth)acryloyl groups used for coating layer formation was replaced with a hydrolysis solution containing carboxylic acid (which contained an aqueous silane coupling agent having carboxylic acid as organic functional group (X-12-1135, manufactured by Shin-Etsu Chemical Co., Ltd., in hydrolyzed form) instead of 3-acryloxypropyl trimethoxysilane (KBM-5103, manufactured by Shin-Etsu Chemical Co., Ltd.)), which was added in such a manner that carboxylic acid accounted for 1.12 mol% per 1 mole of silicon in the coating layer, the same procedure as for the multilayer film 2 was carried out for the production thereof.

Results of evaluation of each film performed by the methods described above are given in Table 1.

### [Table 1]

**[Table 1]**

| | | multilayer film | | | | | | | | | | | | | | |
|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 |
| evaluation | content of acryloyl group (mol%) *1 | 0.00 | 0.17 | 0.28 | 0.34 | 0.56 | 0.79 | 1.01 | 1.12 | 1.68 | 5.59 | 18.72 | 0.00 | 0.00 | 0.00 | 0.00 |
| | oxygen transmission rate (cc/m²/24hr) | 0.22 | 0.23 | 0.22 | 0.24 | 0.23 | 0.29 | 0.33 | 0.35 | 0.53 | 0.80 | 1.30 | 0.32 | 0.27 | 0.28 | 0.33 |
| | water vapor transmission rate (g/m²/24hr) | 0.23 | 0.24 | 0.23 | 0.23 | 0.24 | 0.34 | 0.36 | 0.42 | 0.59 | 1.00 | 2.60 | 0.41 | 0.35 | 0.33 | 0.40 |
| | ratio X/Y between emission intensity X and reference emission peak intensity Y | 1 | 10 | 20 | 41 | 65 | 68 | 84 | 113 | 145 | 272 | 610 | 3 | 3 | 4 | 4 |
| introduced functional group | | acryloyl group | acryloyl group | acryloyl group | acryloyl group | acryloyl group | acryloyl group | acryloyl group | acryloyl group | acryloyl group | acryloyl group | acryloyl group | isocyanate group | vinyl group | epoxy group | carboxylic acid |
| content of introduced functional group (mol%) *1 | | 0.00 | 0.17 | 0.28 | 0.34 | 0.56 | 0.79 | 1.01 | 1.12 | 1.68 | 5.59 | 18.72 | 1.12 | 1.12 | 1.12 | 1.12 |

| | | | | | | | | | | | | | | | | |
|---|---|---|---|---|---|---|---|---|---|---|---|---|---|---|---|---|
| *1: mol% relative to silicon | | | | | | | | | | | | | | | | |

### [Ink]

Inks 1 to 7 were prepared from ink components weighed as shown in Table 2, wherein they were kneaded in a three roll mill (EXAKT (registered trademark) M-80S, manufactured by EXAKT) in the case of high viscosity inks 1 to 5 or dispersed in a batch type sand mill (manufactured by Hayashi Shoten Co., Ltd.) in the case of low viscosity inks 6 and 7.

### [Table 2]

**[Table 2]**

| | | ink | | | | | | |
|---|---|---|---|---|---|---|---|---|
| | | 1 | 2 | 3 | 4 | 5 | 6 | 7 |
| components (parts by mass) | (meth)acrvlate 1 | 58 | 30 | 8 | 0 | 28 | 0 | 0 |
| | (meth)acrylate 2 | 0 | 28 | 50 | 58 | 25 | 0 | 0 |
| | resin 1 | 24 | 24 | 24 | 24 | 24 | 0 | 0 |
| | resin 2 | 0 | 0 | 0 | 0 | 0 | 12 | 0 |
| | resin 3 | 0 | 0 | 0 | 0 | 0 | 0 | 12 |
| | solvent | 0 | 0 | 0 | 0 | 0 | 76 | 76 |
| | pigment 1 | 18 | 18 | 18 | 18 | 18 | 0 | 0 |
| | pigment 2 | 0 | 0 | 0 | 0 | 0 | 12 | 12 |
| | photopolymerization initiator | 0 | 0 | 0 | 0 | 5 | 0 | 0 |
| properties | equivalent weight (g/eq) | 169 | 254 | 420 | 550 | 275 | 0 | 0 |

### [Ink components]

(Meth)acrylate 1: pentaerythritol triacrylate (Miramer (registered trademark) M340, manufactured by MIWON)
(Meth)acrylate 2: EO-modified trimethylolpropane triacrylate (Miramer (registered trademark) M3150, manufactured by MIWON)
Resin 1: non-photosensitive acrylic resin (TWR-3001, Toray Industries, Inc.), weight average molecular weight 30,000
Resin 2: polyamide resin (Newmide 841, manufactured by Harima Chemicals, Inc.), weight average molecular weight 2,800
Resin 3: polyurethane resin having amino group. Synthesized by reacting 100 parts by mass of 3-methyl-1,5-pentylene adipate diol, 100 parts by mass of polypropylene glycol having a weight average molecular weight of 2,000, and 44.4 parts by mass of isophorone diisocyanate in nitrogen gas at 100°C to 105°C for 4 hours, followed by adding 15.6 parts by mass of isophorone diamine to introduce terminal amines. Weight average molecular weight 12,000.
Solvent: ethyl acetate (manufactured by Wakenyaku Co., Ltd.)
Pigment 1: copper phthalocyanine (Cyanine Blue 4920, manufactured by Dainichiseika Color & Chemicals Mfg. Co., Ltd.)
Pigment 2: copper phthalocyanine (FASTOGEN (registered trademark) BLUE LA5380, manufactured by DIC Corporation)
Photopolymerization initiator: bis(2,4,6-trimethylbenzoyl)-phenylphosphine oxide (Irgacure (registered trademark) 819, manufactured by BASF)

The Inks 8 to 17 are as described below.
Ink 8: Richcure WL EB Cyan (electron beam-curable waterless offset lithographic ink, manufactured by Naigai Ink Mfg. Co., Ltd.), containing photosensitive resin. Acrylic equivalent weight 166 g/eq.
Ink 9: EC DEVELOPMENT Cyan (electron beam-curable offset lithographic ink, manufactured by Sun Chemical), not containing photosensitive resin. Acrylic equivalent weight 260 g/eq.
Ink 10: ELEXONE Cyan (electron beam-curable flexo ink, manufactured by Toyo Ink Co., Ltd.), not containing photosensitive resin. Acrylic equivalent weight 403 g/eq.
Ink 11: GEL-FLEX Cyan (electron beam-curable flexo ink, manufactured by Sakata INX Corporation), not containing photosensitive resin. Acrylic equivalent weight 451 g/eq.
Ink 12: Daicure (registered trademark) DOC-B KLS Process Cyan (ultraviolet-curable offset lithographic ink, manufactured by DIC Corporation), not containing photosensitive resin. Acrylic equivalent weight 243 g/eq.
Ink 13: Richcure 3W WL Cyan (ultraviolet-curable offset lithographic ink, manufactured by Naigai Ink Mfg. Co., Ltd.), containing photosensitive resin. Acrylic equivalent weight 204 g/eq.
Ink 14: Rio Alpha (registered trademark) S R39 Cyan (solvent gravure ink for bottom printing, manufactured by Toyo Ink Co., Ltd.), containing polyurethane resin. Not having amino group. Weight average molecular weight 8,000.
Ink 15: XA-55-N Cyan 800 G (solvent flexo ink for surface printing, manufactured by Sakata INX Corporation), not containing polyurethane resin. Containing wax.
Ink 16: XS-903 (water based flexo ink for bottom printing, manufactured by DIC Corporation), not containing polyurethane resin. Not having amino group. Weight average molecular weight 20,000.
Ink 17: Marine Gloss PE (water based flexo ink for surface printing, manufactured by DIC Corporation), not containing polyurethane resin. Containing wax.

### [Example 1]

On the coating layer of the multilayer film 5 in which acryloyl groups accounted for 0.56 mol%, the electron beam-curable ink 1 was thinly spread using an RI tester, and a solid printed sample was prepared under electron beam irradiation using an electron beam irradiation apparatus (EC250/30/90 LS, manufactured by Iwasaki Electric Co., Ltd.) at an acceleration voltage of 110 kV and an exposure dose of 30 kGy. Results of evaluation performed by the methods described above are given in Table 3.

### [Examples 2 to 8]

Except for using the electron beam-curable inks 2 to 4 and 8 to 11 instead of the electron beam-curable ink 1, the same procedure as in Example 1 was carried out to produce solid printed samples. Results of evaluation performed by the methods described above are given in Table 3.

### [Examples 9 to 11]

The ultraviolet-curable inks 5, 12, and 13 were thinly spread over the coating layer of the multilayer film 5 using an RI tester. They were irradiated with an LED-UV beam under the conditions of an irradiation intensity of 8 W/cm² and an irradiation wavelength of 385 nm using a light emitting diode-ultraviolet irradiation device (UD90, manufactured by Panasonic Industrial Devices SUNX Co., Ltd.) to produce solid printed samples. Results of evaluation performed by the methods described above are given in Table 3.

### [Table 3]

**[Table 3]**

| | example | | | | | | | | | | |
|---|---|---|---|---|---|---|---|---|---|---|---|
| | 1 | 2 | 3 | 4 | 5 | 6 | 7 | 8 | 9 | 10 | 11 |
| ink | 1 | 2 | 3 | 4 | 8 | 9 | 10 | 11 | 5 | 12 | 13 |
| multilayer film | 5 | 5 | 5 | 5 | 5 | 5 | 5 | 5 | 5 | 5 | 5 |
| peel strength (N/15mm) | 4.8 | 4.3 | 3.7 | 2.8 | 5.5 | 4.1 | 3.7 | 2.9 | 2.3 | 2.3 | 3.4 |

### [Examples 12 to 14]

The solvent drying inks for bottom printing 6, 7, and 14 were thinly spread over the coating layer of the multilayer film 5 using a No. 8 bar coater and dried at 80°C for 1 minute in a hot air dryer to produce solid printed samples. Results of evaluation performed by the methods described above are given in Table 4.

### [Example 15]

Except for using the solvent drying ink for surface printing 15 instead of the solvent drying ink for bottom printing 6, the same procedure as in Example 12 was carried out to produce a solid printed sample. Results of evaluation performed by the methods described above are given in Table 4.

### [Example 16]

Except for using the water drying ink for bottom printing 16 instead of the solvent drying ink for bottom printing 6, the same procedure as in Example 12 was carried out to produce a solid printed sample. Results of evaluation performed by the methods described above are given in Table 4.

### [Example 17]

Except for using the water drying ink for surface printing 17 instead of the solvent drying ink for surface printing 15, the same procedure as in Example 15 was carried out to produce a solid printed sample. Results of evaluation performed by the methods described above are given in Table 4.

### [Table 4]

**[Table 4]**

| | example | | | | | |
|---|---|---|---|---|---|---|
| | 12 | 13 | 14 | 15 | 16 | 17 |
| ink | 6 | 7 | 14 | 15 | 16 | 17 |
| multilayer film | 5 | 5 | 5 | 5 | 5 | 5 |
| peel strength (N/15mm) | 2.6 | 5.3 | 4.6 | | 4.1 | |
| peelability | | | | A | | A |
| abrasion resistance | | | | A | | A |

### [Examples 18 to 25 and Comparative examples 1, 2, and 4 to 7]

Except for using the multilayer films 1 to 4 and 6 to 15 instead of the multilayer film 5, the same procedure as in Example 5 was carried out to produce solid printed samples. Results of evaluation performed by the methods described above are given in Table 5.

### [Examples 26 to 33 and Comparative example 3]

Except for using the multilayer films 2 to 4 and 6 to 11 instead of the multilayer film 5, the same procedure as in Example 14 was carried out to produce solid printed samples. Results of evaluation performed by the methods described above are given in Table 5.

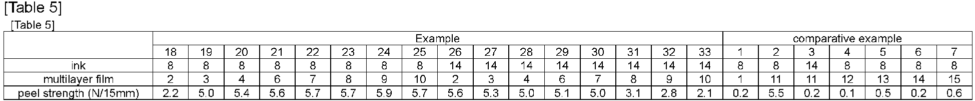

### [Examples 34 to 36]

Except for using the multilayer films 3, 7, and 10 instead of the multilayer film 5, the same procedure as in Example 9 was carried out to produce solid printed samples. Results of evaluation performed by the methods described above are given in Table 6.

### [Examples 37 and 38]

Except for using the multilayer films 8 and 10 instead of the multilayer film 5, the same procedure as in Example 13 was carried out to produce solid printed samples. Results of evaluation performed by the methods described above are given in Table 6.

### [Table 6]

**[Table 6]**

| | example | | | | |
|---|---|---|---|---|---|
| | 34 | 35 | 36 | 37 | 38 |
| ink | 5 | 5 | 5 | 7 | 7 |
| multilayer film | 3 | 7 | 10 | 8 | 10 |
| peel strength (N/15mm) | 2.0 | 3.8 | 4.9 | 4.4 | 3.2 |

## Claims

1. A method for producing printed matter including a step for transferring ink onto a coating layer of a multilayer film that has a metal layer and/or an inorganic compound layer along with the coating layer disposed in this order on at least one surface of a base film and a step for drying and/or curing the transferred ink, wherein the ratio of X/Y is 5 or more and 300 or less, where X represents an emission peak intensity determined by observing the multilayer film through the coating layer under measuring conditions as described below while Y is a reference emission peak intensity:
<Measuring conditions>
the surface of the coating layer of the multilayer film is brought into contact with a tetrahydrofuran (THF) solution of 4-nitro-7-piperazino-2,1,3-benzoxadiazole with a concentration of 1 × 10⁻⁴ mol/L at 60°C for 30 minutes; a piece of 15 mm × 15 mm is cut out;
and an emission spectrum is measured at an excitation wavelength of 470 nm to determine the maximum value observed in the wavelength range of 520 to 550 nm to represent the emission peak intensity X;
<Reference peak>
the emission peak intensity in the range of 520 to 550 nm measured from the THF solution of 4-nitro-7-piperazino-2,1,3-benzoxadiazole with a concentration of 1 × 10⁻⁵ mol/L is adopted as reference emission peak intensity Y.

2. A method for producing printed matter as set forth in claim 1, wherein the ink is a water based ink or a solvent ink and a step for drying the ink is included as the step for drying and/or curing the transferred ink.

3. A method for producing printed matter as set forth in claim 2, wherein the ink contains a polyurethane resin being devoid of (meth)acryloyl groups and having a weight average molecular weight of 5,000 or more.

4. A method for producing printed matter as set forth in claim 3, wherein the polyurethane resin being devoid of (meth)acryloyl groups and having a weight average molecular weight of 5,000 or more has a primary amino group and/or a secondary amino group.

5. A method for producing printed matter as set forth in claim 1, wherein the ink is an active energy ray-curable ink and a step for curing the ink by irradiation with an active energy ray is included as the step for drying and/or curing the transferred ink.

6. A method for producing printed matter as set forth in claim 5, wherein the active energy ray is an electron beam.

7. A method for producing printed matter as set forth in either claim 5 or 6, wherein the active energy ray-curable ink contains a photosensitive resin.

8. A method for producing printed matter as set forth in any one of claims 5 to 7, wherein the ink has an acrylic equivalent weight of 150 g/eq or more and 500 g/eq or less.

9. A method for producing printed matter as set forth in any one of claims 1 to 8, wherein the coating layer contains silicon and (meth)acryloyl groups, with the (meth)acryloyl groups accounting for 0.25 mol% or more and 1.25 mol% or less relative to silicon.

10. A method for producing printed matter as set forth in any one of claims 1 to 9, wherein the coating layer contains a water-soluble resin and a hydrolysate of a metal alkoxide and/or a polycondensate thereof.

11. A method for producing printed matter as set forth in any one of claims 1 to 10, wherein the metal layer and/or the inorganic compound layer contain aluminum.

12. A method for producing printed matter as set forth in any one of claims 1 to 11, wherein the multilayer film has a water vapor transmission rate of 1.0 g/m²/24 hr or less and an oxygen transmission rate of 1.0 cc/m²/24 hr or less.

13. A method for producing printed matter as set forth in any one of claims 1 to 12, wherein the multilayer film has a ratio X/Y of 18 or more and 100 or less, where X is an emission peak intensity thereof measured through the coating layer under the conditions described above and Y is the reference emission peak intensity.

14. A method for producing printed matter as set forth in any one of claims 1 to 13, wherein the base film is a polyolefin based resin film.
